# EUROPEAN PATENT SPECIFICATION

(11) **EP 2 836 076 B1**
(45) Date of publication and mention of the grant of the patent: **25.05.2016**
(21) Application number: 13729485.6
(22) Date of filing: 10.04.2013
(51) Int. Cl.: A22C 17/00

(54) **IMPROVED SKEWER MACHINE FOR CONTINUOUSLY PRODUCING FOOD ON SKEWERS**
VERBESSERTE SPIESSMASCHINE ZUR KONTINUIERLICHEN HERSTELLUNG VON NAHRUNGSMITTELN AUF SPIESSEN
MACHINE À BROCHETTE PERFECTIONNÉE DESTINÉE À PRODUIRE DE MANIÈRE CONTINUE DES ALIMENTS SUR DES BROCHETTES

(30) Priority: 12.04.2012 IT RM20120155
(43) Date of publication of application: 18.02.2015
(73) Proprietor: Vitileia, Nicolino, 65010 Collecorvino (PE) (IT)
(72) Inventor: Vitileia, Nicolino, 65010 Collecorvino (PE) (IT)
(74) Representative: Sarpi, Maurizio
(86) International application number: PCT/IT2013/000103
(87) International publication number: WO 2013/153565

(56) References cited:
- WO-A1-2009/025082
- FR-A1- 2 929 079
- NL-C2- 1 035 785
- US-A1- 2009 181 155

## Description

The subject of the invention is a skewering machine, i.e., a machine for the production of foodstuffs cut into pieces or having small dimensions, arranged on skewers, by which they are held together.

This type of foodstuffs, known more commonly as "sack-on-skewer", or, if roasted, as "arrosticini", "shish kebab", "kepab" or "kebab", "churrasco", "souvlaki", etc., is widespread in many culinary traditions of the world.

The pieces of food used are in general red and white meat, fish, vegetables or fruit, as well as foodstuff products already prepared, such as würstel, sausages, etc.

Preparation of the product is particularly laborious, irrespective of the pieces of food used, in so far as it envisages, in a first step, preparation of the piece/pieces of food required, possibly cutting them into portions, and then, in a second step, manual arrangement of the pieces on the skewers, possibly alternating the layers of the various pieces of food according to the recipe chosen.

The laboriousness of these operations has oriented several manufacturers to the production of machines that are able to facilitate and/or carry out the mechanical operations of skewering.

The document No. US 2009/181155 describes a machine for kebabs for automatically inserting wooden skewers in various foodstuff components, such as for example meat, vegetables, and the like. The foodstuff components are kept inside the conveyors, whereas the individual skewers are conveyed by a skewer conveyor. The skewers are guided through the conveyors and the foodstuff components present therein to form the kebab. As the conveyors are passing over a gear wheel, the adjacent carrying elements tilt with respect to one another with tiltable elongated extensions until they release and expel the skewers with the pieces of food arranged thereon from the conveyors for further processing operations.

The document No. WO 2009/025082 envisages a skewering apparatus that is able to insert a skewer directly in materials placed on a tray so that it can perform a skewering operation in the same manner as when skewering by hand. A tray carrying materials is transferred to a skewering position, and the materials placed on the arraying unit of the tray are then held by the holding unit of a holding device. A circular skewer, which is drawn starting from the guiding passage of a loading unit of a driving device, is inserted straight into the centre of the materials arranged in a line in the arraying unit.

The document No. NL 1035785 describes a device provided with a container having a compartment for withholding the pieces of food, where the dimensions of the compartment are aligned for maintaining in position the pieces of food. A driving unit is arranged on a support, and the compartment is designed for blocking the pieces of food.

The document No. FR2929079 describes a machine that has a supporting base comprising a guard for protection of the guiding unit. The base and the guard enable sliding of a mould-supporting unit, the mould comprising housings for cubes of food and grooves for passage of the skewers for skewering the cubes of food.

The above machines are based upon the use of particular containers or trays bearing a succession of housings or cells, having the shape and set in the order chosen by the manufacturer.

Each cell will have the shape of the product that it is designed to receive, i.e., of the piece of meat, vegetable, sausage, etc.

To speed up the operations of filling, the trays are mounted on a conveyor, or on other movement systems, in such a way that, with a certain cadence, the operator is presented, in succession, with empty trays to be filled.

However, the skewers produced mechanically with the methods referred to above present a series of disadvantages and problems, above all regarding the efficiency and reliability of the machines themselves.

The main purpose of the invention is hence to overcome said disadvantages by providing a machine presenting greater efficiency, reliability, and productivity as compared to the machines currently on the market.

The above purpose has been obtained, according to the present invention by providing a machine presenting substantial modifications to some functional elements and consequently to the modalities of execution of the steps of the production cycle, as specified in the ensuing Claim 1.

A better understanding of the invention will be obtained from the ensuing detailed description with reference to the attached drawings, which illustrate a preferred embodiment thereof purely by way of nonlimiting example.

In the drawings:
Figure 1 shows a container/tray of a known type, used in existing skewering machines,
Figure 2 is a view of the principle used in the machines currently on the market;
Figure 3 is a view of the principle diagram used in the new skewering system;
Figure 4 is a view of the main elements of the new system for arranging the pieces of food on the skewers set in a revolver-type arrangement.
Figure 5 is a view of the system for closing the containers/trays by means of the new flexible-band system;
Figure 6 is a schematic view of the currently known device for selection and automatic loading of the skewers;

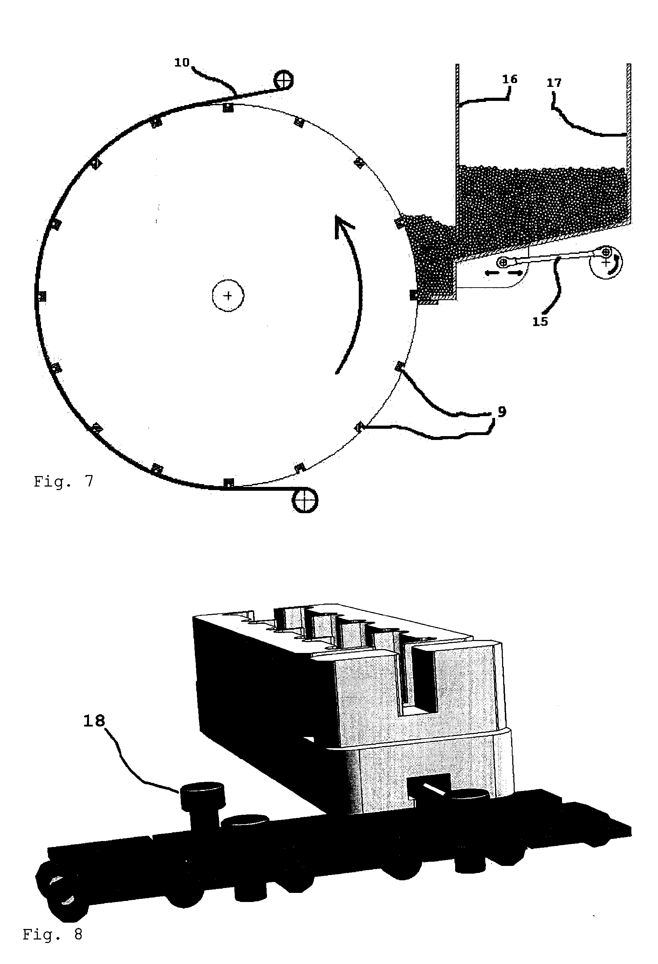

Figure 7 is a schematic view of the new device for selection and automatic loading of the skewers;
Figure 8 shows the system for fast coupling of the containers/trays to the conveying system;

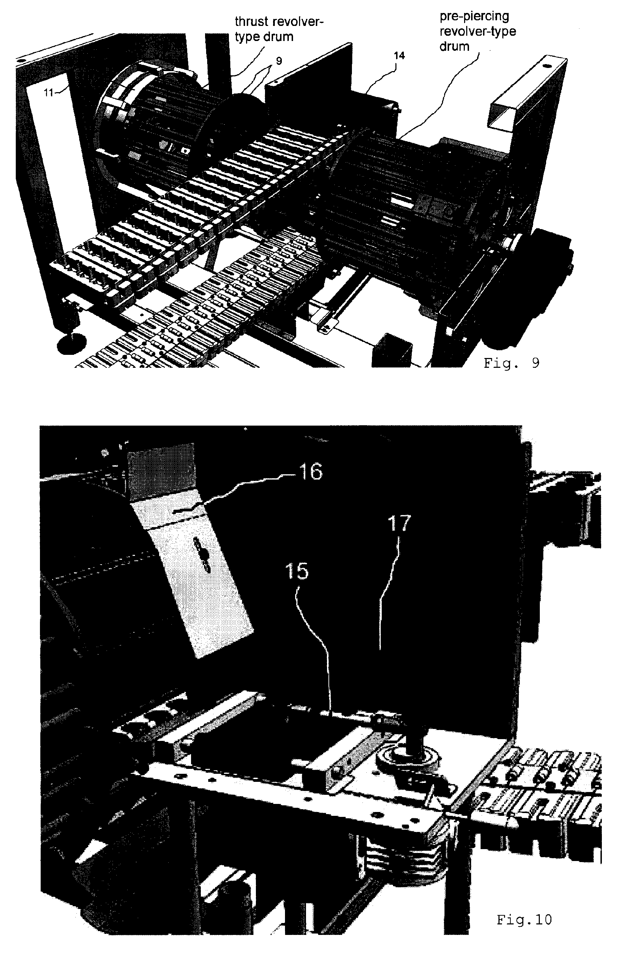

Figure 9 is a 3D view, from the side opposite to that of Figure 4, which shows a part of the invention already assembled in the portion for conveying of the food to be skewered and for arrangement thereof on the skewers;
Figure 10 is a 3D view from the side opposite to the previous one, which illustrates the new system for automatic loading of the skewers; and

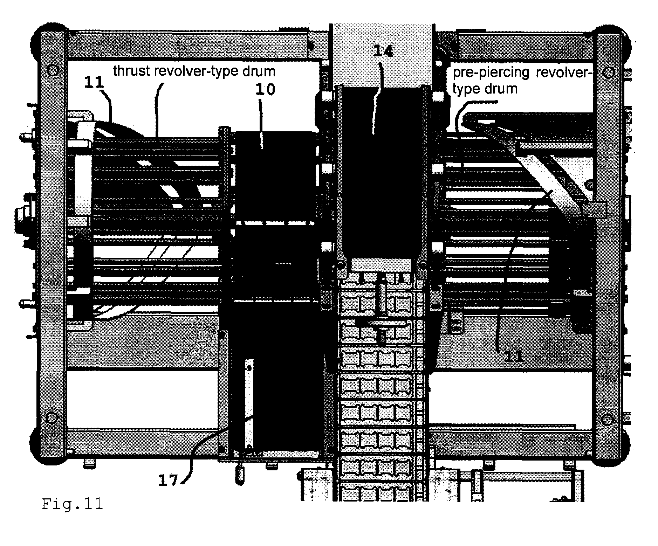

Figure 11 is a top plan view corresponding to those of Figures 9 and 10.
As is will be seen more clearly in what follows, the main improvements introduced by the present invention are:
   A. improvements to the skewering system;
   B. improvements designed to increase the productivity by providing a continuous skewering cycle without any pause and/or intermittence;
   C. improvements to the system for closing the containers/trays;
   D. improvements to automatic pick-up of the skewers; and
   E. improvements to the system for connection of the containers/trays to the conveyor to enable, in the case of change of format of the product, a fast replacement thereof without dismantling the conveyor.

### A - Improvements to the skewering system

The machines currently on the market are constituted by a conveyor, fixed on which are the containers/trays, or else by some other system for conveying the containers/trays.

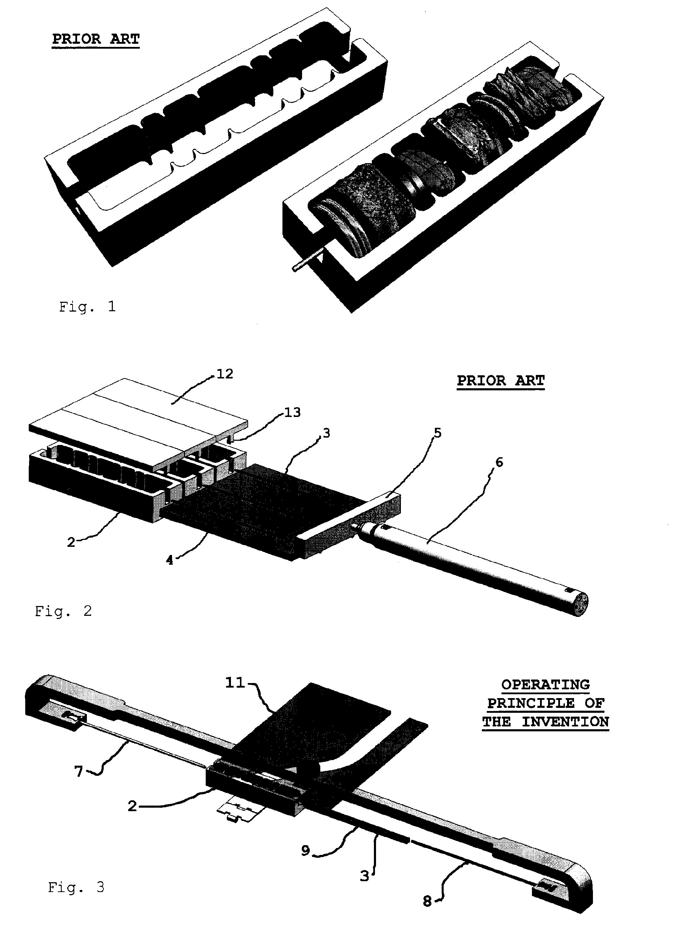

As may be seen in Figure 2, currently arrangement of the pieces of food on the skewers 3 deposited in the grooves of the sliding plate 4 is obtained by pushing the skewer into the tray and into the product contained therein by means of a pusher 5 actuated by a pneumatic cylinder 6 or some other equivalent system.

Unlike known existing systems, the skewering system of the invention is constituted by:
i) a first moving element comprising a first pointed needle 7, preferably made of stainless steel, designed for pre-piercing the piece of food;
ii) a second moving element comprising a second needle 8, preferably made of stainless steel, designed for pushing the skewer 3 into the piece of food;
iii) means for synchronized movement by cams 11 of the two moving elements referred to in points i) and ii);
iv) means for picking up the skewers 3 from a purposely provided magazine; and
v) means for containing the skewers 3 in the respective housings 9 using a purposely provided flexible band 10,
wherein said moving elements, said means for picking up the skewers, and said respective housings for the skewers all move in synchronism with continuous motion corresponding to the movement of the containers/trays for the foodstuff product to be skewered.

It should be noted that by means of said skewering system the following purposes are achieved:

### a) PERFECT CENTRING OF THE SKEWER IN THE PRODUCT

The system is such as to guarantee that, during the movement of skewering, the skewer is always guided and accompanied so as to prevent it from coming out of the foodstuff product in the passage between the various cells of the tray or so as to prevent, on account of the variation of consistency of the various products skewered, the skewer from being deviated and coming out of the product to be skewered.

### b) GUARANTEE THAT THE SKEWERS WON'T STICK, DEFLECT OR BREAK

Simple skewering by pushing the skewer into the piece of food does not prevent, where defects of rectilinearity (skewer bent) are present, the skewer from possibly sticking in the passage between one cell and another of the tray, or else from possibly deflecting in its path, thus failing to skewer some piece of food or, worse still, from possibly breaking and thus jeopardizing production.

According to a peculiar characteristic of the invention, by subjecting the foodstuff product in advance to an operation of pre-piercing by means of a rigid needle 7 and extracting the needle as the skewer 3 advances in the product, the present invention guarantees that the aforementioned problems and defects will not arise.

Another peculiar characteristic of the invention is represented by the fact that, during arrangement of the foodstuff products on the skewers 3, the latter translate with respect to the band 10 that keeps them within the respective housings 9. Advantageously, the friction that is generated between the skewers 3 and the band 10, which holds them in the housings 9 during the skewering process, causes a rotation of each skewer in its housing, achieving a substantial effect of self-centring even in the case where the skewers are slightly bent.

For this purpose, the skewers 3 project slightly in a radial direction from the respective housings 9 so as to be always in contact with the band 10 that turns them.

### B. Improvements designed to increase productivity by providing a continuous skewering cycle without an pause and/or intermittence

The machines currently available on the market are constituted by a conveyor on which the containers/trays are fixed. Skewering is obtained as a rule in the following way:
The conveyor advances in steps (i.e., in a discontinuous way).

In fact, when the tray, after being filled, is in the skewering station, the conveyor stops, the tray is closed mechanically, and the skewer is pushed into the tray by a pneumatic cylinder or some other equivalent system.

Unlike in the known art, the present invention is constituted by a plurality of synchronized piercing and thrust moving elements, set circumferentially in a revolver-type arrangement, where actuation of the pre-piercing needles and of the skewering device is obtained by means of an innovative desmodromic control with cams 11 synchronized with the movement of the conveyor belt.

One of the peculiar characteristics of the present invention lies in the fact that the means for picking up the skewers, the moving elements for perforating foodstuffs and for pushing the skewers, and the trays that contain the foodstuffs to be skewered all move in a synchronized way with continuous motion.

Advance of the conveyor is consequently always continuous in all its parts, there being no dead times between one skewering operation and the next.

Another advantage of the invention is that, unlike the known machines that shoot the skewer into the product in order to reduce to a minimum the times of arrest of the cycle, in the present invention the skewering speed, thanks to the cams of the desmodromic control, is very low, gentle, and progressive, thus guaranteeing of the integrity of the product, which, otherwise, might "explode".

### C. Improvements to the system for closing the containers/trays

The machines currently available on the market are constituted by a conveyor on which the containers/trays are fixed. Closing of the containers/trays is obtained by means of rigid elements 12 that are set resting and pressed against them (Figure 2).

Unlike known existing systems, the system for closing the containers/trays according to the present invention is constituted by a continuous belt 14 that moves in synchronism with the conveyor. The belt, pressed on the conveyor, and in particular on the containers/trays that contain the foodstuffs, ensures a delicate grip of the foodstuff product/products, does not require (see Figure 2) any particular centring 13 between the containers/trays and the lids, and does not require any further motor-drives and/or other drives since it is moved by the friction between the belt and the containers themselves.

### D. Improvements to automatic pick-up of the skewers

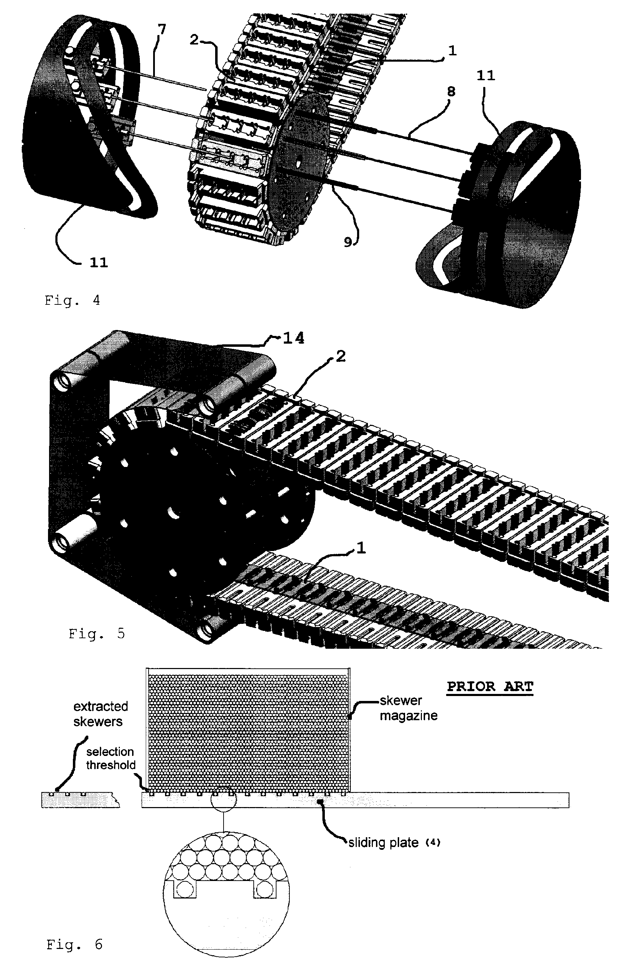

In currently known skewering machines (Figure 6), the skewers are deposited in an orderly way in prismatic containers provided with a mobile bottom constituted by a sliding plate 4 provided with grooves transverse with respect to the direction of the movement of the plate itself, into which the skewers 3 drop by gravity.

In other words, said plate 4 is made to translate with horizontal motion so as to extract only and exclusively the skewers 3 that have remained imprisoned in the grooves.

With the above known systems the following drawbacks arise:
1. Difficulty of arrangement of the food on the skewer 3 in the grooves in the case of poor linearity of the skewer (skewer twisted) or in the case of skewers with diameter out of tolerance. To overcome these problems the tendency is to make the grooves wider than the diameter of the skewer.
2. Possibility, given the greater width of the grooves, of erroneously picking up two skewers housed in one and the same groove or in any case of drawing two of them up to the selection threshold.
3. Frequent jamming of the skewers in the selection threshold: the end wall of the magazine, in the direction of motion of the plate, operates as selector; i.e., it "scrapes away " from the plate the skewers that are not housed in the grooves. At this point, all the problems due to the imperfections of diameter and of rectilinearity of the skewers are concentrated, creating frequent interruptions and/or requests for intervention for releasing any jamming that arises.

In the case of jamming of the skewer against the selection threshold, if the thrust exerted on the plate is sufficient, there may even occur splintering of the skewer, with the possible entry of splinters of the skewer in the foodstuffs.

To overcome the above drawbacks, the present invention envisages an innovative system for picking up the skewers, where the skewer magazine has a fixed front wall 16, whereas the rest of the magazine 17, provided with an inclined bottom, is mobile with reciprocating horizontal motion produced by a purposely provided crank system 15.

This system enables continuous ordering of the bundled skewers in so far as they are forced, owing to friction between them, to turn on their axes and to set themselves in an orderly way in a plane, without any superposition and/or criss-crossing.

The aforesaid reciprocating horizontal motion moreover generates the thrust for skewering of the food in the respective pick-up housings 9.

### E. Improvements to the system for connection of the containers/trays to the conveyor to enable, in the case of change of format of the product, a fast replacement thereof, without dismantling the conveyor

In the majority of known systems, the containers/trays are constrained in a fixed way on the conveyor so that the operations of replacement thereof, in the case where it were necessary to change the production program, require long operations for dismantling and replacement given the large number of containers/trays normally mounted on the conveyor.

In the present invention, the operation of replacement of the containers/trays is carried out in a fast way and without the use of tools, said containers/trays being constrained to the conveyor by a fast-coupling system 18 of a known type, preferably of a bayonet type or in some other similar way.

## Claims

1. A skewering machine for producing food on skewers, of the type that uses a plurality of containers/trays (2) for the foodstuff product that are provided with cells according to the pieces of food to be skewered, wherein skewering is obtained by pre-piercing the pieces of food with steel needles (7), said machine being **characterized in that** it comprises means such that, after pre-piercing, skewering of the pieces of food with each skewer (3) is obtained in synchronism with extraction of the respective pre-piercing needle (7) in such a way that advance of the skewer into the piece of food is constantly guided by the hole left by the corresponding needle; said pre-piercing of the pieces of foods and said skewering thereof being obtained with continuous movement means without interrupting the motion of the containers/trays (2).

2. The machine according to the preceding claim, **characterized in that** skewering of the pieces of food is obtained with continuous motion by means of a plurality of purposely provided pre-piercing moving elements and of respective thrust moving elements (8), said moving elements being set in a revolver-type arrangement on at least one rotary drum.

3. The machine according to the preceding claim, **characterized in that** said pre-piercing and thrust moving elements are actuated by a system of cams (11) designed to guarantee smooth and continuous movements during rotation of the revolver-type drum.

4. The machine according to the preceding claim, **characterized in that**, in addition to insertion of the skewer (3) into the pieces of food guided by the movement of extraction of the pre-piercing needle (7) envisages that, during skewering, the skewers (3) undergo a movement of axial rotation such as to improve advance and self-centring thereof; said rotary movement of the skewers (3) being imposed by means of a purposely provided band (10) designed to keep the skewers (3) in respective housings (9), which are provided on a rotary drum or rotor and with respect to which the skewers project radially to remain always in contact with the band (10).

5. The machine according to the preceding claim, **characterized in that** it envisages a magazine (17) for the skewers (3), which is provided with means that move it with reciprocating rectilinear motion such as to enable constant ordering of the skewers (3) both inside it and upon extraction therefrom; thus obtaining that the skewers adhere to the outer surface of the drum carrying the housings (9) and are picked up in a continuous way from the bundle that adheres to the drum itself, without any reciprocating movements.

6. The machine according to any one of the preceding claims, **characterized in that** to enable that the change of production, i.e., the replacement of the containers/trays (2) mounted on the conveyor (1) can take place in short times, provided on the conveyor (1) are fast-coupling means for the containers/trays (2) that do not require the use of tools.

7. The machine according to Claim 2, **characterized in that** said piercing and thrust elements, which are mobile and synchronized, are set circumferentially so as to constitute a revolver-type arrangement, wherein actuation of the pre-piercing needles (7) and of the skewering device (8) is obtained by means of an innovative desmodromic cam command (11) synchronized with the movement of the conveyor belt.

8. The machine according to any one of the preceding claims, **characterized in that** it envisages means for closing the containers/trays (2) that are basically constituted by an endless belt (14) that moves in synchronism with the conveyor (1); said belt (14) being pressed on the conveyor and in particular on the containers/trays that contain the pieces of food to ensure a gentle grip on the piece/pieces of food, without the need for further drives and/or motor drives, given that it is moved by the friction between the belt itself and the containers (2) themselves.

9. The machine according to Claim 5, **characterized in that** it envisages an innovative system for picking up the skewers (3), wherein the skewer magazine (17) has a fixed front wall (16), whilst the rest of the magazine, provided with an inclined bottom, is mobile with reciprocating horizontal motion obtained via a purposely provided crankshaft system (15).

10. The machine according to Claim 1, **characterized in that** it comprises means for skewering basically constituted by:
i) a first moving element comprising a first pointed needle (7), preferably made of stainless steel, designed for pre-piercing the pieces of food;
ii) a second moving element comprising a second needle (8), preferably made of stainless steel, designed for pushing the skewer (3) into the pieces of food;
iii) means for synchronized movement by means of cams (11) of the two moving elements referred to in the previous points i) and ii);
iv) means for picking up the skewers (3) from a purposely provided magazine; and
v) means for containing the skewers (3) within respective housings (9) by means of a purposely provided flexible band (10).

## Patentansprüche

1. Spießbratmaschine zur Herstellung von Essen auf Bratspießen, von dem Typ, der eine Mehrzahl von Behältern/Schalen (2) für das Lebensmittelprodukt benutzt, die mit Zellen gemäß den zu bratenden Stücken des Lebensmittels versehen sind, wobei das Spießbraten durch Vorstechen der Lebensmittelstücke mit Stahlnadeln (7) erhalten wird, wobei die Maschine
**dadurch gekennzeichnet ist, dass**
sie derartige Mittel aufweist, dass nach dem Vorstechen ein Aufspießen der Lebensmittelstücke mit jedem Bratspieß (3) in Synchronität mit dem Herausziehen der entsprechenden Vorstechnadel (7) auf solche Weise erreicht wird, dass ein Vorschub des Bratspießes in das Lebensmittelstück konstant durch das durch die entsprechende Nadel hinterlassene Loch geführt wird, wobei das Vorstechen der Lebensmittelstücke und deren Aufspießen mit kontinuierlichen Bewegungsmitteln ohne Unterbrechung der Bewegung der Behälter/Schalen (2) erhalten wird.

2. Maschine nach dem vorangehenden Anspruch,
**dadurch gekennzeichnet, dass**
das Aufspießen der Lebensmittelstücke durch kontinuierliche Bewegung mittels einer Mehrzahl von absichtsvoll vorgesehenen Vorstech-Bewegungselementen und entsprechenden Stoß-Bewegungselementen (8) erhalten wird, wobei die sich bewegenden Elemente in einer revolverartigen Anordnung auf mindestens einer Drehtrommel eingesetzt sind.

3. Maschine nach dem vorangehenden Anspruch,
**dadurch gekennzeichnet, dass**
die Vorstech-Bewegungselemente und Stoß-Bewegungselemente durch ein System von Mitnehmern bzw. Kurvenscheiben (11) betätigt werden, die so gestaltet sind, dass sie flüssige und kontinuierliche Bewegungen während der Drehung der revolverartigen Trommel garantieren.

4. Maschine nach dem vorangehenden Anspruch
**dadurch gekennzeichnet, dass**
zusätzlich zum Einführen des Bratspießes (3) in die Lebensmittelstücke, die durch die Bewegung des Herausziehens der Vorstechnadel (7) geführt wird, vorgesehen ist, dass während des Aufspießens die Bratspieße (3) einer Bewegung einer axialen Rotation unterliegen, um ihren Vorschub und ihre Selbstzentrierung zu verbessern, wobei die Drehbewegung den Bratspießen (3) mittels eines absichtsvoll vorgesehenen Bandes (10) auferlegt wird, das so gestaltet ist, dass die Bratspieße (3) in entsprechenden Gehäusen (7) gehalten werden, welche auf einer drehbaren Trommel oder einem Rotor vorgesehen sind, und bezüglich derer die Bratspieße radial vorstehen, um immer in Kontakt mit dem Band (10) zu bleiben.

5. Maschine nach dem vorangehenden Anspruch,
**dadurch gekennzeichnet, dass**
sie ein Magazin (17) für die Bratspieße (3) vorsieht, welches mit Mitteln versehen ist, die es in einer hin- und hergehenden geradlinigen Bewegung bewegen, derart, dass dies eine konstante Ordnung bzw. Reihenfolge der Bratspieße (3) sowohl innerhalb als auch nach dem Herausziehen ermöglicht, wodurch erreicht wird, dass die Bratspieße an der äußeren Oberfläche der die Gehäuse (9) tragenden Trommel anhaften und in kontinuierlicher Weise aus dem Bündel aufgegriffen werden, das an der Trommel selbst anliegt, ohne hin- und hergehende Bewegungen.

6. Maschine nach einem der vorangehenden Ansprüche,
**dadurch gekennzeichnet, dass**
zur Ermöglichung einer Produktionsänderung, das heißt der Ersetzung der auf dem Band (1) montierten Behälter/Schalen (2), in kurzer Zeit auf dem Band (1) Schnellkopplungsmittel für die Behälter/Schalen (2) vorgesehen sind, die keine Nutzung von Werkzeugen erfordern.

7. Maschine nach Anspruch 2,
**dadurch gekennzeichnet, dass**
die Vorstech- und Stoß-Bewegungselemente, die bewegbar und synchronisiert sind, umfangsartig eingesetzt sind, so dass sie eine revolverartige Anordnung bilden, wobei eine Betätigung der Vorstechnadeln (7) und der Aufspießeinrichtung (8) mittels einer innovativen desmodromischen Kurvenscheibensteuerung (11) erhalten wird, die mit der Bewegung des Förderbandes synchronisiert ist.

8. Maschine nach einem nach einem der vorangehenden Anspräche,
**dadurch gekennzeichnet, dass**
sie Mittel zum Verschließen der Behälter/Schalen (2) vorsieht, die im Wesentlichen durch ein endloses Band (14) gebildet sind, das sich in Synchronität mit dem Förderband (1) bewegt, wobei das Band (14) auf das Förderband und insbesondere auf die Behälter/Schalen gedrückt wird, die die Lebensmitteistücke enthalten, um ein sanftes Erfassen der Lebensmittelstücke zu gewährleisten, ohne Erfordernis weiterer Antriebe und/oder Motorantriebe, vorausgesetzt, dass es durch die Reibung zwischen dem Band selbst und den Behältern (2) selbst bewegt wird.

9. Maschine nach Anspruch 5,
**dadurch gekennzeichnet, dass**
sie ein innovatives System zum Aufgreifen der Bratspieße (3) vorsieht, wobei das Bratspießmagazin (17) eine feststehende Vorderwand (16) hat, während der Rest des Magazins, der mit einem geneigten Boden versehen ist, mit einer hin- und hergehenden horizontalen Bewegung bewegbar ist, die über ein absichtsvoll vorgesehenes Kurbelwellensystem (15) erzeugt wird.

10. Maschine nach Anspruch 1,
**dadurch gekennzeichnet, dass**
sie Mittel zum Spießbraten bzw. Aufspießen aufweist, die im Wesentlichen gebildet sind durch:
i) ein erstes sich bewegendes Elemente, welches eine erste angespitzte Nadel (7) aufweist, die vorzugsweise aus Edelstahl besteht und zum Vorstechen der Lebensmittelstücke gestaltet ist;
ii) ein zweites sich bewegendes Element, welches eine zweite Nadel (8) aufweist, die vorzugsweise aus Edelstahl besteht und so gestaltet ist, dass sie den Bratspieß (3) in die Lebensmittelstücke stößt;
iii) Mittel zur synchronisierten Bewegung mittels Kurvenscheibe (11) der zwei sich bewegenden Elemente, die in den vorstehenden Punkten i) und ii) genannt sind;
iv) Mittel zum Aufgreifen der Bratspieße (3) aus einem absichtsvoll vorgesehenen Magazin; und
v) Mittel zum Aufnehmen der Bratspieße (3) in entsprechenden Gehäusen (9) mittels eines absichtsvoll vorgesehenen flexiblen Bandes (10).

## Revendications

1. Machine à brochette pour la production d'aliments sur des brochettes, du type qui utilise une pluralité de récipients/plateaux (2) pour les dentées alimentaires qui sont pourvus de cellules en fonction des morceaux d'aliment à mettre en brochette, dans laquelle la mise en brochette est obtenue par pré-perçage des morceaux d'aliment avec des aiguilles en acier (7), ladite machine étant **caractérisée en ce qu'**elle comprend des moyens tels que, après le pré-perçage, la mise en brochette des morceaux d'aliment avec chaque brochette (3) est obtenue en synchronisme avec l'extraction de l'aiguille de pré-perçage (7) respective de manière que l'avance de la brochette dans le morceau d'aliment soit guidée constamment par le trou laissé par l'aiguille correspondant ; ledit pré-perçage des morceaux d'aliment et ladite mise en brochette de ceux-ci étant obtenues avec des moyens de déplacement continu sans interruption du mouvement des récipients/plateaux (2).

2. Machine selon la revendication précédente, **caractérisée en ce que** la mise en brochette des morceaux d'aliment est obtenue avec un mouvement continu au moyen d'une pluralité d'éléments mobiles de pré-perçage spécifiquement prévus et d'éléments mobiles de poussée (8) respectifs, lesdits éléments mobiles étant installés dans un agencement de type Révolver sur au moins un tambour rotatif.

3. Machine selon la revendication précédente, **caractérisée en ce que** lesdits éléments mobiles de pré-perçage et de poussée sont actionnées par un système de cames (11) conçu pour garantir des mouvements uniformes et continus durant la rotation du tambour de type révolver.

4. Machine selon la revendication précédente, **caractérisée en ce que**, en plus de l'insertion de la brochette (3) dans les morceaux d'aliment guidée par le mouvement d'extraction de l'aiguille de pré-perçage (7), elle prévoit que, durant la mise en brochette, les brochettes (3) subissent un mouvement de rotation axiale de manière à améliorer l'avance et l'auto-centrage de celle-ci ; ledit mouvement de rotation des brochettes (3) étant imposé au moyen d'une bande spécifiquement prévue (10) conçue pour maintenir les brochettes (3) dans des logements respectifs (9), qui sont prévus sur un tambour rotatif ou rotor et par rapport auquel les brochettes font saillie radialement pour rester toujours en contact avec la bande (10).

5. Machine selon la revendication précédente, **caractérisée en ce qu'**elle prévoit un magasin (17) pour les brochettes (3), qui est muni de moyens qui le déplacent avec un mouvement rectiligne alternatif de manière à permettre un ordre constant des brochettes (3) à la fois à l'intérieure de celui-ci et lors de l'extraction hors de celui-ci ; en obtenant ainsi que les brochettes adhèrent à la surface extérieure du tambour portant les logements (9) et sont prélevées d'une manière continue à partir du faisceau qui adhère au tambour lui-même, sans aucun mouvement alternatif.

6. Machine selon l'une quelconque des revendications précédentes, **caractérisée en ce que**, pour permettre que le changement de production, c'est-à-dire le remplacement des récipients/plateaux (2) montés sur le transporteur (1), puisse s'effectuer dans des temps courts, des moyens d'accouplement rapide pour les récipients/plateaux (2) qui ne nécessitent pas l'utilisation d'outils sont prévus sur le transporteur (1).

7. Machine selon la revendication 2, **caractérisée en ce que** lesdits éléments de perçage et de poussée, qui sont mobiles et synchronisés, sont installés de manière circonférentielle de manière à constituer un agencement de type révolver, dans lequel l'actionnement des aiguilles de pré-perçage (7) et des dispositifs de mise en brochette (8) est obtenu au moyen d'une commande par came desmodromique innovatrice (11) synchronisée avec le mouvement du transporteur à bande.

8. Machine selon l'une quelconque des revendications précédentes, **caractérisée en ce qu'**elle prévoit des moyens pour fermer les récipients/plateaux (2) qui sont constitués essentiellement d'une courroie sans fin (14) qui se déplace en synchronisme avec le transporteur (1) ; ladite courroie (14) étant pressée sur le transporteur et en particulier sur les récipients/plateaux qui contiennent les morceaux d'aliment pour garantir une préhension délicate du ou des morceaux d'aliment, sans la nécessité d'autres entraînements et/ou entraînements motorisés, étant donné qu'il est déplacé par la friction entre la courroie elle-même et les récipients (2) eux-mêmes.

9. Machine selon la revendication 5, **caractérisée en ce qu'**elle prévoit un système innovateur pour prélever les brochettes (3), dans lequel le magasin de brochettes (17) a une paroi avant fixe (16), alors que le reste du magasin, muni d'un fond incliné, est mobile avec un mouvement horizontal alternatif obtenu par l'intermédiaire d'un système de vilebrequin spécifiquement prévu (15).

10. Machine selon la revendication 1, **caractérisée en ce qu'**elle comprend des moyens de mise en brochette constitués essentiellement par :
i) un premier élément mobile comprenant une première aiguille pointue (7), de préférence réalisée en acier inoxydable, conçue pour le pré-perçage des morceaux d'aliment ;
ii) un deuxième élément mobile comprenant une deuxième aiguille (8), de préférence réalisée en acier inoxydable, conçue pour pousser la brochette (3) dans les morceaux d'aliment ;
iii) des moyens pour le mouvement synchronisé au moyen de cames (11) des deux éléments mobiles indiqués dans les points précédents i) et ii) ;
iv) des moyens pour prélever les brochettes (3) à partir d'un magasin spécifiquement prévu ; et
v) des moyens pour contenir les brochettes (3) dans des logements respectifs (9) au moyen d'une bande flexible spécifiquement prévue (10).
